# FASCICULE DE BREVET EUROPEEN

(11) **EP 4 015 353 B1**
(45) Date de publication et mention de la délivrance du brevet: **11.10.2023**
(21) Numéro de dépôt: 21214776.3
(22) Date de dépôt: 15.12.2021
(51) Int. Cl.: B62D 25/06, B62D 29/00

(54) **PANNEAU DE PIÈCE DE CARROSSERIE À DÉFORMATION THERMIQUE LIMITÉE**
KAROSSERIETEILPANEEL MIT BEGRENZTER THERMISCHER VERFORMUNG
PANEL FOR BODYWORK PART WITH LIMITED THERMAL DEFORMATION

(30) Priorité: 18.12.2020 FR 2013735
(43) Date de publication de la demande: 22.06.2022
(73) Titulaire: Compagnie Plastic Omnium SE, 69007 Lyon (FR)
(72) Inventeur: POIRIER, Laurent, 01150 SAINTE-JULIE (FR); COUDRON, Philippe, 01150 SAINTE-JULIE (FR); ROZE, Bertrand, 01150 SAINTE-JULIE (FR)
(74) Mandataire: LLR

(56) Documents cités:
- DE-A1- 10 249 405
- FR-A1- 2 968 631
- JP-A- 2017 185 911

## Description

L'invention concerne le domaine de l'industrie automobile, et en particulier le domaine des pièces de carrosserie en matière plastique.

L'invention concerne notamment un panneau d'aspect enchâssé dans le logement d'une pièce de carrosserie, configuré pour limiter les défauts d'aspect engendrés par une dilation thermique différentielle

Traditionnellement, le toit d'un véhicule automobile ou pavillon comprend un panneau extérieur de grandes dimensions recouvrant la partie haut de la structure de caisse. Ce pavillon contribue à la rigidité et assure l'étanchéité de la zone supérieure du véhicule, son panneau procurant au véhicule l'aspect extérieur dans cette zone. En général, le panneau est constitué d'une tôle métallique et/ou en verre.

Les constructeurs automobiles souhaitent de plus en plus équiper leurs véhicules de dispositifs de communication permettant de recevoir et/ou d'envoyer des informations avec les réseaux de communication ou avec les autres véhicules. C'est notamment le cas pour les véhicules autonomes. Il s'agit par exemple d'implanter dans les véhicules des dispositifs d'émission-réception d'ondes électromagnétiques, tel que des antennes 5G, qui pour des raisons de fonctionnement sont à localiser de préférence en partie haute du véhicule, en particulier juste sous le toit.

Cependant, les toits en acier ne permettent pas un passage correct des ondes électromagnétiques. Les toits en acier rendent donc difficiles l'implantation de tels dispositifs de communication.

Une solution envisageable consiste à substituer une partie du panneau de toit en acier par un panneau en matière plastique, car les matières plastiques sont plus transparentes à ce type d'ondes. Afin d'obtenir la solidité nécessaire à ces panneaux, il est connu d'utiliser une conception à double épaisseur, constituée d'une peau extérieure d'aspect fixée sur une doublure intérieure plus rigide.

Toutefois, un tel panneau extérieur en plastique, enchâssé dans son logement en acier, constitué par le reste du toit et la structure de caisse, subit, lors de l'ensoleillement, une dilatation différentielle amenant des contraintes intrinsèques générant des déformations visibles sur celui-ci. Les défauts induits sur la forme générale du panneau, en jeu et affleurement, excédent les critères de qualité exigés par les cahiers des charges.

Le problème de dilation thermique différentielle d'un panneau enchâssé peut également se rencontrer dans d'autres types de pièces que des toits, par exemple pour des hayons ou des portières.

Le document FR 2 968 631 A1 décrit un panneau d'une pièce de carrosserie de véhicule selon le préambule de la revendication 1.

L'invention a notamment pour but de remédier à ces inconvénients en fournissant un panneau de pièce de carrosserie en matière plastique, enchâssé dans un logement d'une pièce de carrosserie notamment en acier, garantissant une limitation des déformations, et une maîtrise du jeu et de l'affleurement périphériques avec les bords de son logement. L'invention y parvient en utilisant une doublure comportant une zone souple permettant une gestion de la déformée due à la dilation thermique du panneau.

A cet effet l'invention a pour objet un panneau d'une pièce de carrosserie de véhicule, comportant une peau extérieure d'aspect en matière plastique fixée par collage sur toute sa périphérie à une doublure porteuse intérieure en matière plastique, caractérisé en ce que la doublure intérieure comporte sur au moins une partie de sa périphérie, successivement depuis le bord du panneau, une zone de fixation par collage à la peau extérieure puis une zone flexible, c'est-à-dire une zone de plus grande flexibilité que le reste de la doublure porteuse intérieure.

La zone flexible, non visible sous la peau, permet d'absorber de manière cachée une partie de la déformée liée à la dilatation thermique du panneau et en particulier de la peau, tout en garantissant une meilleure finition périphérique en termes de jeu et affleurements, offrant un aspect conforme aux attentes des constructeurs de pièces de carrosserie de véhicule automobile.

Suivant d'autres caractéristiques optionnelles de panneau prises seules ou en combinaison :
- la doublure intérieure comporte sur au moins une partie de sa périphérie, un épaulement portant la zone de fixation puis la zone flexible, puis, à la base de l'épaulement, une deuxième zone de fixation destinée à fixer la doublure intérieure à la pièce de carrosserie et/ou le véhicule ;
- la zone flexible, comporte un l'élément souple tel qu'une structure en accordéon ; l'élément souple en forme d'accordéon est notamment disposé dans le prolongement du bord de la doublure intérieure de manière à ce que sa contraction entraîne un rétrécissement de la longueur de la périphérie de la structure interne et un abaissement du bord de la peau externe en direction de la doublure intérieure. La contraction de l'accordéon survient lors d'une dilatation thermique du panneau. Cet abaissement ne suit pas un mouvement circulaire mais elliptique du fait que le bord de la peau externe est entraîné vers la doublure intérieure par un rétrécissement de la longueur de la périphérie de cette dernière et non par une rotation autour d'un point pivot. Ainsi le bord de la peau externe peut mieux suivre la forme de la surface d'une pièce carrosserie et éviter une trop forte compression d'un joint d'étanchéité fixé au bord de la peau externe ;
- l'élément souple est configuré pour permettre un abaissement ou un mouvement en direction de la doublure intérieure, du bord de la peau extérieure lors d'une dilatation thermique du panneau ;
- le bord de la peau externe est en regard du bord de la doublure intérieure ;
- l'élément souple forme une pièce monobloc avec la doublure, ou l'élément souple est rapporté sur la doublure, notamment par surmoulage. Rapporté l'élément souple sur la doublure permet de simplifier la mise en place de la zone flexible au niveau de la doublure, puisque l'élément souple n'a alors pas de forme particulière à présenter Dans le cas où l'élément souple est sous forme d'accordéons, il peut être rapporté sur la face de la doublure opposée à la peau extérieure afin d'obtenir l'effet d'abaissement du bord de la peau extérieure.. Le matériau de l'élément souple lorsqu'il est rapporté sur la doublure peut notamment être un thermoplastique injecté (avec ou sans fibres de renfort), ou un élastomère ;
- la doublure intérieure comporte entre son bord et l'élément souple une butée, apte à limiter un abaissement du bord de la peau extérieure lors d'une dilatation thermique du panneau ;
- la butée est apte à venir contre la pièce de carrosserie et/ou le véhicule lorsque le panneau est monté sur la pièce de carrosserie et lorsque la pièce de carrosserie et le panneau sont soumis à une dilatation thermique ;
- la doublure intérieure est réalisée en un matériau thermodurcissable, tel que le SMC, ou un matériau thermoplastique chargé, par exemple avec des fibres de verre ou du talc ;
- la peau extérieure est réalisée en un matériau thermoplastique ;
- la peau extérieure et/ou la doublure intérieure comporte un joint d'étanchéité apte à absorber un différentiel de dilatation thermique entre le panneau et la pièce de carrosserie lorsque le panneau est monté sur la pièce de carrosserie et lorsque la pièce de carrosserie et le panneau sont soumis à une dilatation thermique.

Par « abaissement », il est entendu dans l'invention un mouvement en direction de la doublure intérieure.

L'invention a également pour objet une pièce de carrosserie d'un véhicule automobile, comportant un panneau selon l'invention et un corps principal munie d'un logement, le logement étant fermé de façon étanche par le panneau.

Suivant d'autres caractéristiques optionnelles de la pièce de carrosserie prises seules ou en combinaison :
- la pièce de carrosserie d'un véhicule automobile comporte un corps principal munie d'un logement, caractérisée en ce que le logement est fermée de façon étanche par un panneau selon l'une des revendications précédentes.
- le logement fermé par le panneau forme un compartiment étanche comportant au moins un dispositif d'émission et/ou réception d'ondes sous le panneau.
- le corps principal est réalisé en une matière ayant un coefficient de dilation différent des matières plastiques constituant le panneau.
- la pièce de carrosserie constitue un toit, un hayon ou une portière.

### Brève description des figures

L'invention sera mieux comprise à la lecture de la description qui va suivre donnée uniquement à titre d'exemple et faite en se référant aux dessins annexés dans lesquels :
[Fig. 1] illustre un exemple d'une pièce de carrosserie de véhicule selon l'invention
[Fig. 2] illustre un panneau enchâssé dans une pièce de carrosserie selon l'invention, au repos (non dilaté)
[Fig. 3] illustre le panneau de la figure 2 lorsqu'il est soumis à des conditions de température induisant une dilatation thermique de ce panneau
[Fig. 4] illustre un panneau d'une pièce de carrosserie selon l'état de la technique, au repos (non dilaté)
[Fig. 5] illustre le panneau de la figure 4 lorsqu'il est soumis à des conditions de température induisant une dilatation thermique de ce panneau

### Description détaillée

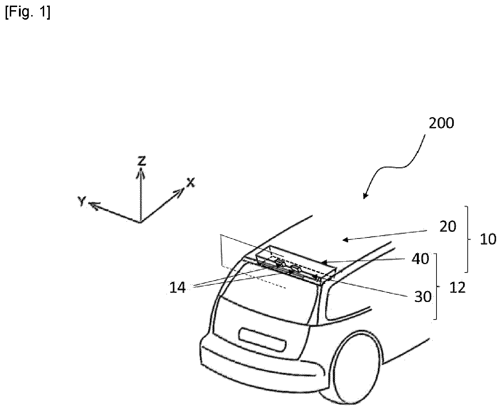

On se réfère maintenant à la figure 1 qui illustre un exemple d'une pièce de carrosserie 10 de véhicule 200. Selon cet exemple, la pièce de carrosserie est un toit, et le véhicule est un véhicule automobile. Le toit comporte un corps principal 20 muni d'un logement 30 fermé de façon étanche par un panneau 40. Le logement 30 comporte des dispositifs 14 électroniques de communication par ondes. Le panneau 40 est affleurant avec la surface supérieure visible du corps principal 20, de façon à ce que le toit présente une surface ayant une continuité de forme.

Le corps principal 20 et le panneau 40 sont réalisés dans des matières différentes, et possèdent notamment un coefficient de dilatation thermique différent. Le corps principal 20 peut par exemple être en un matériau métallique, tel que l'aluminium ou l'acier, et le panneau 40 en différentes matières plastiques.

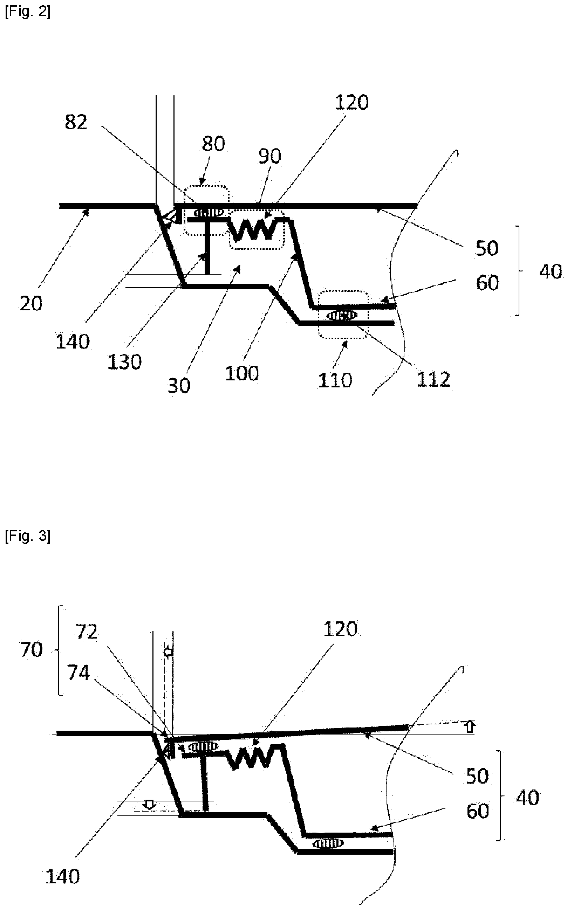

On se réfère maintenant à la figure 2 qui illustre un exemple de réalisation d'un panneau 40 enchâssé dans une pièce de carrosserie 10 de véhicule 200 conforme à l'invention.

Le panneau 40 comporte une peau extérieure 50 d'aspect. Cette peau est réalisée en matière plastique et comporte une face destinée à être visible depuis l'extérieur du véhicule. Afin d'être maintenue solidement, elle est fixée par collage sur toute sa périphérie à une doublure porteuse intérieure 60 en matière plastique. Le cordon de colle permet également de jouer un rôle de joint d'étanchéité afin de rendre étanche le volume situé entre la peau 50 et la doublure 60 pour éviter toute incursion et rétention d'eau (pluie, lavage ...) pendant la vie du véhicule.

Selon un exemple de réalisation, la doublure porteuse intérieure 60 est réalisée en un matériau thermodurcissable, tel que le SMC (acronyme anglais de Sheet Moulding Compound), ou un matériau thermoplastique chargé, par exemple avec des fibres de verre ou du talc. La peau 50 peut être réalisée en un matériau thermoplastique.

La doublure porteuse intérieure 60 comporte, sur au moins une partie de sa périphérie, successivement depuis le bord 70 du panneau 40 :
- une zone de fixation 80 par collage à la peau extérieure 50 ;
- une zone flexible 90, c'est-à-dire une zone de plus grande flexibilité que le reste de la doublure 60 ;
- une deuxième zone 110 de fixation destinée à fixer la doublure intérieure 60 à la pièce de carrosserie 10 et/ou au véhicule 200.

Selon un mode de réalisation, illustré sur les figures, la doublure porteuse intérieure 60 comporte, de façon facultative, sur au moins une partie de sa périphérie, un épaulement 100, comprenant une paroi inclinée et une paroi formant en partie une surface d'appui de la peau 50 sur la doublure 60. L'épaulement 100 porte sur sa surface d'appui la zone de fixation 80 et la zone flexible 90. A la base de l'épaulement 100, se situe la deuxième zone 110 de fixation.

Selon un mode de réalisation, toute la périphérie de la doublure porteuse 60 comporte une zone flexible 90. Selon un autre mode de réalisation, la doublure 60 comporte une zone flexible 90 uniquement sur certains côtés. Par exemple, dans le cas où la pièce de carrosserie 10 est un toit, la doublure 60 comporte une zone flexible 90 de préférence sur les côtés de plus grande dimension : si le panneau 40 constitue une pièce rectangulaire traversant le toit en largeur (la longueur du panneau étant parallèle à l'axe Y), la doublure 60 comporte une zone flexible 90 de préférence sur les côtés parallèles à l'axe Y du véhicule.

La zone de fixation 80 comporte un cordon de colle 82 qui suit toute la périphérie du panneau 40. La doublure 60 forme ainsi un cadre sur lequel est fixée la peau 50.

La zone flexible 90 comporte un élément souple 120. L'élément souple 120 peut former une pièce monobloc avec la doublure 60, ou être rapporté sur la doublure 60, par surmoulage par exemple.

Selon un mode de réalisation, représenté sur les figures 2 et 3, l'élément souple 120 constitue une structure en accordéon donnant ainsi une souplesse à la doublure 60 dans la zone flexible 90. L'élément souple 120 peut également consister en une zone amincie par rapport au reste de la doublure 60, ou alors, à une matière plus souple que celle utilisée pour le reste de la doublure 60.

Selon un mode de réalisation avantageux, la peau extérieure 50 et/ou la doublure intérieure 60 comporte un joint d'étanchéité 140 sur au moins une partie de sa périphérie.

Ce joint 140 permet d'absorber le différentiel de dilatation thermique entre le panneau 40 et la pièce de carrosserie 10 sur laquelle le panneau 40 est destiné à être rapporté pour fermer le logement 30 de la pièce de carrosserie 10. Ceci permet non seulement de garantir l'étanchéité entre le panneau et la pièce, mais aussi d'améliorer l'aspect qualité perçue et de réduire les bruits aérodynamiques.

La zone de fixation 110 comporte un second cordon de colle 112 apte à fixer l'ensemble du panneau 40 sur le corps 20 de la pièce de carrosserie 10 du véhicule 200.

On se réfère maintenant aux figures 3, 4 et 5 afin de décrire le fonctionnement de l'élément souple 120.

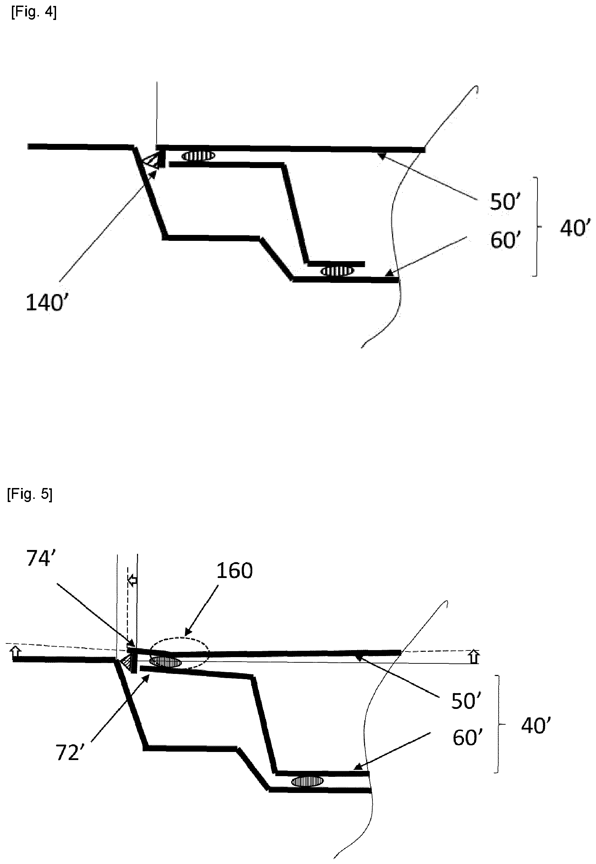

La figure 4 illustre un panneau 40' selon l'état de la technique tel que le panneau 40 de la figure 2, mais sans élément souple. La figure 5, illustre le comportement de la peau 50' et de la doublure porteuse 60' du panneau de la figure 4 lorsque qu'elles sont soumises à une dilatation thermique.

La peau 50' et la doublure 60' se dilatent et leurs bords 74', 72' respectifs se rapprochent de la pièce de carrosserie. Le joint 140' se comprime alors, permettant cette dilatation, tout en maintenant l'étanchéité entre la pièce de carrosserie et le panneau 40'.

Le cordon de colle 82' maintient la peau 50' et la doublure 60' sur toute leur périphérie. De ce fait, tout le cisaillement dû à la dilatation thermique différentielle, entre la peau 50' et la doublure 60', se situe dans et autour du cordon de colle 82'. Il y a donc un risque de décollement de la peau 50'.

De plus, la peau 50' étant libre, sauf au niveau du cordon de colle 82' où elle est tenue, la partie centrale de la peau 50', c'est-à-dire la partie entourée par le cordon de colle 82', se soulève en se dilatant.

Enfin, on observe que les bords 74' de la peau 50' à l'extérieur du cordon de colle 82' remontent et s'écartent de la doublure 60' sous l'effet de la dilation thermique. Ce soulèvement engendre des problèmes :
- le bord 74' de la peau 50' n'est plus affleurant avec la surface extérieure visible de la pièce de carrosserie ; de ce fait un jeu apparait entre le corps principal et le bord 74' de la peau 50'. Ceci n'est pas acceptable pour un véhicule ;
- il apparait également un défaut de forme 160 le long du cordon de colle 82' conduisant à un défaut d'aspect inacceptable pour un véhicule.

La figure 3, illustre le comportement de la peau 50 et de la doublure 60 du panneau de la figure 2 lorsque qu'elles sont soumises à une dilatation thermique.

La peau 50 et la doublure 60 se dilatent et leurs bords 74, 72 respectifs se rapprochent de la pièce de carrosserie 10. Le joint 140 se comprime alors, permettant cette dilatation tout en maintenant l'étanchéité entre la pièce de carrosserie et le panneau 40.

Là encore, la peau 50 étant libre, sauf au niveau du cordon de colle 82 où elle est tenue, la partie centrale de la peau 50, se soulève en se dilatant.

Cependant, l'élément souple 120 donne de la souplesse au bord 72 de la doublure 60 dans la zone tenue par la colle. De ce fait, contrairement au cas de la figure 5, le bord 74 de la peau 50 effectue un mouvement inverse : il ne se soulève pas, mais il s'abaisse. Ainsi, l'élément souple 120 permet au bord 70 de l'ensemble de « suivre » la forme donnée par le gonflement et donc d'éviter (limiter) une discontinuité de forme 160.

Cet abaissement du bord 70 est plus acceptable en termes de qualité perçue qu'un soulèvement. Mais surtout, l'élément souple 120 permet ainsi de libérer les contraintes dans le cordon de colle 82 et plus généralement dans la zone 80, et donc de minimiser le défaut d'aspect au droit du cordon de colle.

Selon un mode de réalisation avantageux, la doublure intérieure 60 comporte entre son bord 72 et l'élément souple 120 une butée 130, par exemple sous forme d'une nervure locale, apte à venir s'appuyer vers le bas contre la pièce de carrosserie 10 et/ou le véhicule 200 lorsque le panneau est monté sur la pièce de carrosserie 10 et lorsque la pièce de carrosserie 10 et le panneau 40 sont soumis à une dilatation.

Ainsi, l'abaissement du bord 74 de la peau 50 peut être contrôlé, limité, lorsque la butée 130 vient en appui contre la pièce de carrosserie 10 et/ou le véhicule 200.

Le positionnement de l'élément souple 120 entre les deux cordons de colle 82 et 112 permet une dilatation répartie de manière homogène, et, combiné aux butées ponctuelles 130 judicieusement positionnées, atténue efficacement l'abaissement sur la périphérie, et par conséquent limite le gonflement en son centre. Cet effet ressort limite aussi l'impact visuel des défauts au droit de la piste de collage.

L'invention concerne également la pièce de carrosserie 10 d'un véhicule automobile 200. La pièce de carrosserie selon l'invention comporte un corps principal 20 munie logement 30 fermé de façon étanche par le panneau 40 selon l'invention.

Le corps principal 20 et le panneau 40 sont réalisés dans des matières différentes, et possèdent notamment un coefficient de dilatation thermique différent. Le corps principal 20 peut par exemple être en un matériau métallique, tel que l'aluminium ou l'acier, et le panneau 40 en différentes matières plastiques.

Selon un mode de réalisation, le panneau 40 comporte un logement 30 fermé par le panneau 40, le logement 30 et le panneau 40 forment alors un compartiment 12 étanche comportant au moins un dispositif 14 d'émission et/ou réception d'ondes sous le panneau 40, tel qu'une antenne 5G.

Selon un autre mode de réalisation, le panneau 40 comporte un compartiment 12 étanche sous l'ouverture 30, fermé par le panneau 40, le compartiment 12 étanche comportant au moins un dispositif 14 d'émission et/ou réception d'ondes sous le panneau 40, tel qu'une antenne 5G.

L'invention n'est pas limitée aux modes de réalisation présentés et d'autres modes de réalisation apparaîtront clairement à l'homme du métier. Il est notamment possible de que la pièce de carrosserie 10 constitue non un toit, mais un hayon ou une portière. L'invention est toutefois limitée par la portée des revendications annexées.

### Liste de références

- 10 :: pièce de carrosserie
- 12 :: compartiment étanche
- 14 :: dispositif d'émission et/ou réception d'ondes sous le panneau 40, tel qu'une antenne 5G
- 20 :: corps principal de la pièce de carrosserie 10
- 30 :: logement de la pièce de carrosserie 10
- 40 :: panneau recouvrant le logement 30
- 50 :: peau extérieure du panneau 40
- 60 :: doublure porteuse intérieure du panneau 40
- 70 :: bord du panneau 40
- 72 :: bord de la doublure 60
- 74 :: bord de la peau 50
- 80 :: zone de fixation de la doublure 60
- 82 :: cordon de colle de la zone de fixation 80
- 90 :: zone flexible de la doublure 60
- 100 :: épaulement de la doublure 60
- 110 :: deuxième zone de fixation destinée à fixer la doublure intérieure 60 à la pièce de carrosserie 10 et/ou le véhicule 200
- 112 :: cordon de colle de la deuxième zone de fixation 110
- 120 :: élément souple de la zone flexible 90 de la doublure 60
- 130 :: butée de la doublure 60
- 140 :: joint d'étanchéité
- 160 :: défaut de forme
- 200 :: véhicule

Les références 40', 50', 60', 72', 74' et 140' correspondent respectivement aux références 40, 50, 60, 72, 74 et 140 pour un panneau ne comportant pas de zone flexible 90.

## Revendications

1. Panneau (40) d'une pièce de carrosserie (10) de véhicule (200), comportant une peau extérieure (50) d'aspect en matière plastique fixée par collage sur toute sa périphérie à une doublure porteuse intérieure (60) en matière plastique, **caractérisé en ce que** la doublure intérieure (60) comporte sur au moins une partie de sa périphérie, successivement depuis le bord (70) du panneau (40), une zone de fixation (80) par collage à la peau extérieure (50) puis une zone flexible (90).

2. Panneau (40) selon la revendication précédente, dans lequel la doublure intérieure (60) comporte sur au moins une partie de sa périphérie, un épaulement (100) portant la zone de fixation (80) puis la zone flexible (90), puis, à la base de l'épaulement (100), une deuxième zone (110) de fixation destinée à fixer la doublure intérieure (60) à la pièce de carrosserie (10) et/ou le véhicule (200).

3. Panneau (40) selon la revendication précédente, dans lequel la zone flexible (90), comporte un l'élément souple (120) tel qu'une structure en accordéon.

4. Panneau (40) selon la revendication précédente, dans lequel l'élément souple (120) est configuré pour permettre un abaissement du bord (74) de la peau extérieure (50) lors d'une dilatation thermique du panneau (40).

5. Panneau (40) selon la revendication précédente, dans lequel l'élément souple (120) forme une pièce monobloc avec la doublure (60), ou l'élément souple (120) est rapporté sur la doublure (60), notamment par surmoulage.

6. Panneau (40) selon la revendication précédente, dans lequel la doublure intérieure (60) comporte entre son bord (72) et l'élément souple (120) une butée (130), apte à limiter un abaissement du bord (74) de la peau extérieure (50) lors d'une dilatation thermique du panneau (40).

7. Panneau (40) selon la revendication précédente, dans lequel la butée (130) est apte à venir contre la pièce de carrosserie (10) et/ou le véhicule (200) lorsque le panneau (40) est monté sur la pièce de carrosserie (10) et lorsque la pièce de carrosserie (10) et le panneau (40) sont soumis à une dilatation thermique.

8. Panneau (40) selon l'une des revendications précédentes, dans lequel la doublure intérieure (60) est réalisée en un matériau thermodurcissable, tel que le SMC, ou un matériau thermoplastique chargé, par exemple avec des fibres de verre ou du talc.

9. Panneau (40) selon l'une des revendications précédentes, dans lequel la peau extérieure (50) est réalisée en un matériau thermoplastique.

10. Panneau (40) selon l'une des revendications précédentes, dans lequel la peau extérieure (50) et/ou la doublure intérieure (60) comporte un joint d'étanchéité (140) apte à absorber un différentiel de dilatation thermique entre le panneau (40) et la pièce de carrosserie (10) lorsque le panneau (40) est monté sur la pièce de carrosserie (10) et lorsque la pièce de carrosserie (10) et le panneau (40) sont soumis à une dilatation thermique.

11. Pièce de carrosserie (10) d'un véhicule automobile (200), comportant un panneau (40) selon l'une des revendications précédentes et un corps principal (20) muni d'un logement (30), **caractérisée en ce que** le logement (30) est fermé de façon étanche par le panneau (40).

12. Pièce de carrosserie (10) selon la revendication précédente, dans laquelle le logement (30) fermé par le panneau (40) forme un compartiment (12) étanche comportant au moins un dispositif (14) d'émission et/ou réception d'ondes sous le panneau (40).

13. Pièce de carrosserie (10) selon l'une des revendications 11 et 12, dans laquelle le corps principal (20) est réalisé en une matière ayant un coefficient de dilation différent des matières plastiques constituant le panneau (40).

14. Pièce de carrosserie (10) selon l'une des revendications 11 à 13, constituant un toit, un hayon ou une portière.

## Patentansprüche

1. Paneel (40) eines Karosserieteils (1) eines Fahrzeugs (200), aufweisend eine Außenhaut (50) mit Kunststoffoptik, die durch Verkleben über ihren gesamtem Umfang an einer tragenden Innenverkleidung aus Kunststoff (60) befestigt ist, **dadurch gekennzeichnet, dass** die Innenverkleidung (60) über wenigstens einen Teil ihres Umfangs nacheinander, von dem Rand (70) des Paneels (40) aus, eine Zone (80) für die Befestigung (80) durch Verkleben an der Außenhaut (50) und anschließend eine flexible Zone (90) aufweist.

2. Paneel (40) nach dem vorhergehenden Anspruch, wobei die Innenverkleidung (60) über wenigstens einen Teil ihres Umfangs einen Absatz (100), der die Befestigungszone (80) und anschließend die flexible Zone (90) trägt und anschließend, an der Basis des Absatzes (100), eine zweite Befestigungszone (110) aufweist, die dazu bestimmt ist, die Innenverkleidung (60) an dem Karosserieteil (10) und/oder an dem Fahrzeug (200) zu befestigen.

3. Paneel (40) nach dem vorhergehenden Anspruch, wobei die flexible Zone (90) ein flexibles Element (120) aufweist, wie eine ziehharmonikaförmige Struktur.

4. Paneel (40) nach dem vorhergehenden Anspruch, wobei das flexible Element (120) ausgebildet ist, um ein Absenken des Randes (74) der Außenhaut (50) bei einer Wärmeausdehnung des Paneels (40) zu gestatten.

5. Paneel (40) nach dem vorhergehenden Anspruch, wobei das flexible Element (120) ein einstückiges Teil mit der Verkleidung (60) bildet oder das flexible Element (120) an der Verkleidung (60) angebracht ist, insbesondere durch Aufformen.

6. Paneel (40) nach dem vorhergehenden Anspruch, wobei die Innenverkleidung (60) zwischen ihrem Rand (72) und dem flexiblen Element (120) einen Anschlag (130) aufweist, der eingerichtet ist, um ein Absenken des Randes (74) der Außenhaut (50) bei einer Wärmeausdehnung des Paneels (40) zu begrenzen.

7. Paneel (40) nach dem vorhergehenden Anspruch, wobei der Anschlag (130) eingerichtet ist, um sich gegen das Karosserieteil (10) und/oder das Fahrzeug (200) anzulegen, wenn das Paneel (40) auf dem Karosserieteil (10) montiert ist und wenn das Karosserieteil (10) und das Paneel (40) einer Wärmeausdehnung unterliegen.

8. Paneel (40) nach einem der vorhergehenden Ansprüche, wobei die Innenverkleidung (60) aus einem duroplastischen Werkstoff, wie SMC, oder einem thermoplastischen Werkstoff realisiert ist, der, zum Beispiel mit Glasfasern oder Talkum, gefüllt ist.

9. Paneel (40) nach einem der vorhergehenden Ansprüche, wobei die Außenhaut (50) aus einem thermoplastischem Werkstoff realisiert ist.

10. Paneel (40) nach einem der vorhergehenden Ansprüche, wobei die Außenhaut (50) und/oder die Innenverkleidung (60) ein Dichtungselement (140) aufweist, das eingerichtet ist, um eine Differenz in der Wärmeausdehnung zwischen dem Paneel (40) und dem Karosserieteil (10) zu absorbieren, wenn das Paneel (40) auf dem Karosserieteil (10) montiert ist und wenn das Karosserieteil (10) und das Paneel (40) einer Wärmeausdehnung unterliegen.

11. Karosserieteil (10) eines Kraftfahrzeugs (200), aufweisend ein Paneel (40) nach einem der vorhergehenden Ansprüche und einen Hauptkorpus (20), der mit einer Aufnahme (30) versehen ist, **dadurch gekennzeichnet, dass** die Aufnahme (30) durch das Paneel (40) abdichtend verschlossen ist.

12. Karosserieteil (10) nach dem vorhergehenden Anspruch, wobei die durch das Paneel (40) abdichtend verschlossene Aufnahme (30) einen abgedichteten Raum (12) bildet, der wenigstens eine Vorrichtung (14) zum Aussenden oder Empfangen von Wellen unter dem Paneel (40) aufweist.

13. Karosserieteil (10) nach einem der Ansprüche 11 und 12, wobei der Hauptkorpus (20) aus einem Material realisiert ist, das einen Ausdehnungskoeffizienten aufweist, der von den Kunststoffen, aus denen das Paneel (40) besteht, verschieden ist.

14. Karosserieteil (10) nach einem der Ansprüche 11 bis 13, das ein Dach, eine Heckklappe oder eine Tür bildet.

## Claims

1. Panel (40) of a vehicle body part (10), comprising an outer skin (50) of plastic appearance attached by gluing along its entire periphery to an inner carrier liner (60) of plastic, **characterized in that** the inner liner (60) comprises on at least part of its periphery, successively from the edge (70) of the panel (40), an attachment area (80) by gluing to the outer skin (50) and then a flexible area (90).

2. Panel (40) according to the preceding claim, wherein the inner liner (60) comprises on at least part of its periphery, a shoulder (100) bearing the attachment area (80) and then the flexible area (90), and, at the base of the shoulder (100), a second attachment zone (110) for fixing the inner liner (60) to the body part (10) and / or to the vehicle (200).

3. Panel (40) according to the preceding claim, wherein the flexible area (90), comprises a flexible element (120) such as an accordion structure.

4. Panel (40) according to the preceding claim, wherein the flexible element (120) is configured to allow a lowering of the edge (74) of the outer skin (50) during a thermal expansion of the panel (40).

5. Panel (40) according to the preceding claim, wherein the flexible element (120) forms a monobloc part with the inner liner (60), or the flexible element (120) is applied on the inner liner (60), in particular by overmolding.

6. Panel (40) according to the preceding claim, wherein the inner liner (60) comprises between its edge (72) and the flexible element (120) a stop (130), capable of limiting a lowering of the edge (74) of the outer skin (50) during thermal expansion of the panel (40).

7. Panel (40) according to the preceding claim, wherein the stop (130) is capable of coming against the body part (10) and / or the vehicle (200) when the panel (40) is mounted on the body part (10) and when the body part (10) and the panel (40) are subjected to thermal expansion.

8. Panel (40) according to one of the preceding claims, wherein the inner liner (60) is made of a thermosetting material, such as SMC, or a thermoplastic material reinforced, for example with glass fibers or talc.

9. Panel (40) according to one of the preceding claims, wherein the outer skin (50) is made of a thermoplastic material.

10. Panel (40) according to one of the preceding claims, wherein the outer skin (50) and / or the inner liner (60) comprises a gasket (140) capable of absorbing a thermal expansion differential between the panel (40) and the body part (10) when the panel (40) is mounted on the body part (10) and when the body part (10) and the panel (40) are subjected to thermal expansion.

11. Body part (10) of a motor vehicle (200), comprising a panel (40) according to one of the preceding claims and a main body (20) provided with a housing (30), **characterized in that** the housing (30) is sealed by the panel (40).

12. Body part (10) according to the preceding claim, wherein the housing (30) closed by the panel (40) and forms a compartment (12) watertight comprising at least one device (14) for transmitting and / or receiving waves under the panel (40).

13. Body part (10) according to one of claims 11 and 12, wherein the main body (20) is made of a material having a coefficient of expansion different from the plastics constituting the panel (40).

14. Body part (10) according to one of claims 11 to 13, constituting a roof, a tailgate or a door.
